# EUROPÄISCHE PATENTANMELDUNG

(11) **EP 1 310 152 A1**
(43) Veröffentlichungstag der Anmeldung: **14.05.2003**
(21) Anmeldenummer: 01204262.8
(22) Anmeldetag: 09.11.2001
(51) Int. Cl.: A01F 15/07

(54) **Vorrichtung und verfahren zum Umhüllen von Körpern insbesondere von Erntegutballen**

(71) Anmelder: Lely Enterprises AG, 6300 ZUG (CH)
(72) Erfinder: Platon, Günter, 38321 Klein Denkte (DE)
(74) Vertreter: Corten, Maurice Jean F.M.

(57) **Zusammenfassung**

Die Erfindung betrifft eine Vorrichtung zum Umhüllen von Körpern, insbesondere von Erntegutballen (1, 34, 50, 65) aus Heu, Stroh oder angewelktem Grüngut, welche mit wenigstens einer Umhüllmaterialbahn (8, 36, 57, 74) umwickelt werden. Um diese Vorrichtung hinsichtlich der Einstellung und Überwachung des Umhüllprozesses zu verbessern und zu vereinfachen, wird erfindungsgemäß vorgeschlagen, daß die Vorrichtung (3, 4, 44, 49, 64) eine oder mehrere Sensoreinrichtung/en ( 23, 24, 28, 30, 42, 43, 47, 59, 63, 71, 75, 76) zur Überwachung und/oder Steuerung des Umhüllprozesses und/oder zur Kontrolle der fertigen Ballenumhüllung aufweist.

## Beschreibung

Die Erfindung betrifft eine Vorrichtung zum Umhüllen von Körpern, insbesondere von Erntegutballen aus Heu, Stroh oder angewelktem Grüngut, welche mit wenigstens einer Umhüllmaterialbahn umwickelt werden.

Die Erfindung betrifft ferner ein Verfahren zum Umhüllen von Körpern, insbesondere von Erntegutballen aus Heu, Stroh oder angewelktem Grüngut in einer vorstehend genannten Vorrichtung.

Die Umwicklung von Ballen aus frischem oder vorgewelktem Gras mit einer dehnbaren und selbsthaftenden Folie wird gegenwärtig immer beliebter, weil die dicht umwickelten Ballen neben weiteren Vorteilen innerhalb der Folienumhüllung in relativ kurzer Zeit zu Silage reifen, ohne daß die Umwelt schädigender Silagesaft austritt, wie es bei Fahrsilos oder Silagetürmen der Fall ist.

Es werden sowohl runde wie auch rechteckige Ballen eingewickelt. Derzeit sind im wesentlichen zwei Ballen-Umwicklungssysteme in der Praxis eingeführt. Bei dem sogenannten Wickeltischsystem werden während der Drehung des Ballens um eine horizontale Achse und gleichzeitiger Drehung um eine vertikale Achse aufeinanderfolgende überdeckende Folienwicklungen zwei bis dreimal um den gesamten äußeren Ballenumfang herumgelegt. Bei dem sogenannten Dreharmgerät liegt der Ballen zwar auch auf einer Art Wickeltisch, der den Ballen um seine horizontale Längsachse dreht, jedoch dreht sich der Wickeltisch nicht gleichzeitig um seine senkrechte Achse, sondern die Relativdrehung zwischen Ballen und Vorratsrolle wird durch einen den Ballen umkreisenden, an seinem äußeren Ende die Folienrolle tragenden Dreharm erzeugt.

Die Silagequalität hängt neben der Ballenqualität insbesondere von der Qualität der Folienumwicklung ab.

Die Qualität der Folienumwicklung wird durch die Qualität der Folie, d.h. Herstellungsverfahren (gezogen oder geblasen), Foliendicke, Folienfärbung (weiß, schwarz, grün), Reißkraft, Klebkraft sowie Gasdurchlässigkeit und insbesondere durch die Sorgfalt des Anwenders bestimmt, d.h. genaue Einstellung der Vorstreckung der Folie, gleichmäßige und ausreichende Folienüberlappung sowie die richtige Lagenzahl der Folienbahnen bzw. -schichten.

Die Einstellungen erfolgen zur Zeit manuell, so daß es der Sorgfalt des Bedieners obliegt, ob hochwertige Silage entsteht oder nicht.

Folgende Parameter sind bei der Einstellung zu berücksichtigen:
- Folienbreite
- Ballendurchmesser
- Anzahl der Folienlagen
- Anzahl der Umwicklungen
- Überdeckung der Folienbahnen
- Anzahl der Folienbahnen bzw Folienvorratsrollen pro Ballenumdrehung

Beim Dreharmgerät erfolgt die Einstellung zur Zeit wie folgt:
Vorgaben:
- Ballendurchmesser 1,2 m
- Folienbreite: 500 mm
- Überdeckungsgrad 55 %
- 4 Folienlagen

Geräteseitig ist der Überdeckungsgrad voreinstellbar, z.B. durch Vorgabe des Drehzahlverhältnisses von Ballen zu Dreharm. Bei Wickelbeginn kontrolliert man visuell die voreingestellte Folienüberdeckung der ersten Folienlagen und korrigiert manuell.

Die erforderliche Anzahl der Dreharmumdrehungen ist abhängig von der Zahl der Folienlagen und dem Ballendurchmesser. Man zählt zunächst während der Umwicklung des ersten Ballens die Anzahl der Umdrehungen des Dreharms mit, die notwendig ist, bis die gesamte Oberfläche mit Folie bewickelt ist. Diese Anzahl der Umdrehungen ist auch auf dem Display des elektronischen Steuergerätes ersichtlich. Im Falle von 55 % eingestellter Folienüberdeckung hat man jetzt zwei Folienlagen /-schichten auf den Ballen gelegt. Der Ballen hat sich eine halbe Umdrehung um seine Zylinderachse gedreht. Wenn man 4 Folienlagen wünscht, multipliziert man den gezählten Wert mit 2 (4 Lagen) oder mit 3 (6 Lagen) und gibt diesen Wert in die elektronische Steuereinheit ein, so daß nachfolgende Ballen automatisch mit diesen gespeicherten Vorgaben eingewickelt werden.

Besonders nachteilig sind diese Einstellungen bei den in jüngster Zeit vermehrt auf den Markt kommenden Kombinationen von Rundballenpressen und nachgeschaltetem Wickelgerät zu bewerkstelligen, da der Wickler vom Schleppersitz nicht einsehbar ist.

Diese Vorgehensweise hat neben dem Bedieneraufwand folgende Nachteile:
- keine Überwachung der Überdeckungen
- keine Überwachung, daß vorgegebene Zahl von Folienumwicklungen auch vorgegebene Lagenzahl überall auf Ballenoberfläche erzeugt
- vorgegebene Einstellwerte gelten nur für
   a) einen Ballendurchmesser
   b) eine Folienbreite
   c) eine Folienbahn pro Ballenumdrehung
   d) einen Überdeckungsgrad

Sobald sich wenigstens einer der Parameter a bis d ändert, wird der Ballen nicht mehr wie vorgegeben umwickelt. Wird beispielsweise statt eines 1,2 m Ballendurchmessers ein 1,3 m Ballendurchmesser umwickelt, fehlen auf einem Teilumfang Folienumwicklungen.

Der Erfindung liegt die Aufgabe zugrunde, die eingangs beschriebene Vorrichtung hinsichtlich der Einstellungen und Überwachungen des Umhüllprozesses zu verbessern und zu vereinfachen.

Diese Aufgabe wird hinsichtlich der Vorrichtung gelöst durch eine oder mehrere Sensoreinrichtung/en zur Überwachung und/ oder Steuerung des Umhüllprozesses und/oder zur Kontrolle der fertigen Ballenumhüllung.

Die der Erfindung zugrundeliegende Aufgabe wird hinsichtlich des Verfahrens dadurch gelöst, daß die Anzahl der Umhüllmaterialumwicklungen bis zur erstmaligen vollständigen Umhüllung des Ballens durch Sensoreinrichtungen gemessen und an eine Steuer- /Regeleinheit und/oder dem Bediener signalisiert wird.

Mit der erfindungsgemäßen Vorrichtung bzw. dem erfindungsgemäßen Verfahren ist somit eine völlig neue Bedienung und Überwachung möglich, wobei die Einstellungen und Überwachungen automatisch erfolgen und Vorgaben auf ein Mindestmaß reduziert sind. Man braucht lediglich nur noch die Anzahl der Umhüllmateriallagen vorzugeben. Bei vorbestimmter Umhüllmaterialbreite und voreingestellter Umhüllmaterialüberdeckung wird automatisch mittels einer ersten Sensoreinrichtung abhängig von unterschiedlichen Ballendurchmessern, Umhüllmaterialüberdeckung und/oder einer oder mehrerer Umwickeleinrichtungen und insbesondere unabhängig vom Bediener automatisch jeweils die richtige Anzahl der Umhüllmaterialumwicklungen pro Ballen zur Erreichung der vorgegebenen Umhüllmateriallagen ermittelt und für die Steuerung der Vorrichtung verwendet.

Eine zweite Sensoreinrichtung prüft während des Umhüllprozesses einmalig, mehrmals oder ständig die Ist-Überdeckung zweier aufeinander folgender Umhüllmaterialumwicklungen. Die Signale einer oder beider Sensoreinrichtungen werden an eine Alarm- oder Informationseinrichtung für die Bedienperson und/oder an eine Steuerungsund/oder Regeleinrichtung für den Umhüllprozeß weitergegeben, die die Werte auswertet, einen Soll-Istvergleich durchführt und in Stellgrößen umsetzt zur Einregelung der Istwerte auf die Sollwerte. Besonders vorteilhaft ist diese Selbststeuerung und -überwachung des Umhüllungsprozesses bei Umhüllungsvorrichtungen, die hinter der Presse angeordnet sind.

Eine vereinfachte Ausführungsform besteht darin, nur die fertige Ballenumhüllung mittels Sensoreinrichtungen zu kontrollieren oder zusätzlich nachzukontrollieren.

Weitere zweckmäßige Ausgestaltungen der Erfindung ergeben sich aus den übrigen Unteransprüchen und aus der nachfolgenden Beschreibung mehrerer Ausführungsbeispiele des Erfindungsgegenstandes anhand der Zeichnung.

### Es zeigen:

Fig.1 in perspektivischer schematischer Darstellung eine erfindungsgemäße Dreharm-Wickelvorrichtung mit einer einem unbewickelten, punktgerasterten Rundballenbereich zugeordneten Sensoreinrichtung und einer dem bewickelten Rundballenbereich zugeordneten, an einem Dreharm angeordneten Sensoreinrichtung;
Fig. 2 eine Ansicht nach Fig.1 mit einer einem unbewickelten Umfangsbereich eines Rundballens zugeordneten Sensoreinrichtung und einer Sensoreinrichtung zum Erkennen eines Ballenstillstandes, wobei die elektronischen und hydraulischen Steuerungselemente übersichtshalber weggelassen sind;
Fig.3 in perspektivischer schematischer Darstellung eine erfindungsgemäße Drehtisch-Wickelvorrichtung mit einer einem unbewickelten Ballenbereich zugeordneten Sensoreinrichtung und einer einem bewickelten Ballenbereich zubeordneten Sensoreinrichtung und
Fig.4 eine schematische Seitenansicht auf eine Drehtisch-Wickelvorrichtung mit zwei Sensoreinrichtungen in anderer Anordnung.

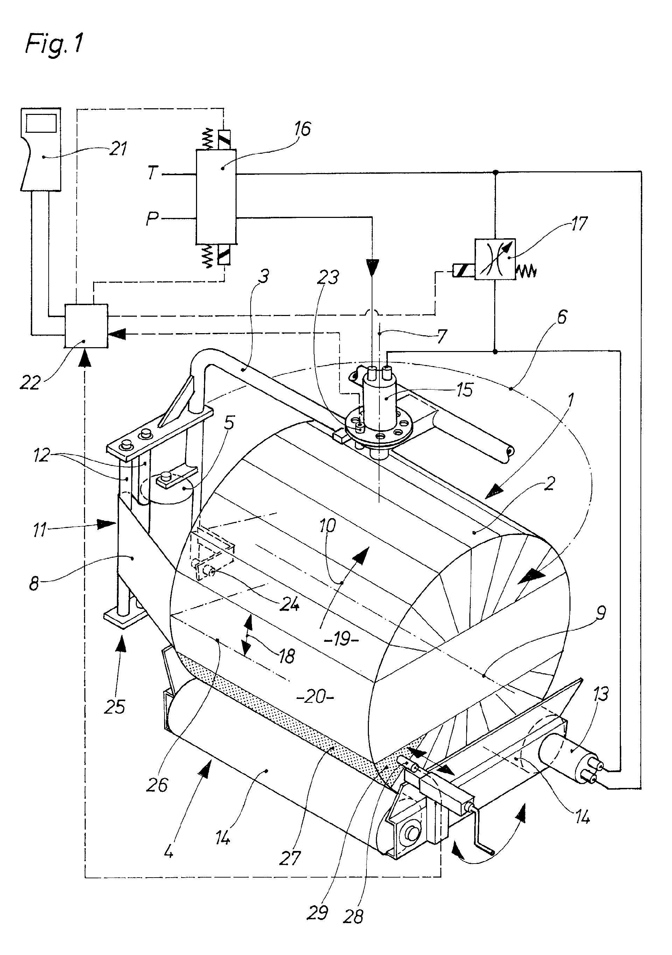

Bei der in Figur 1 dargestellten Vorrichtung zum Umhüllen eines Erntegutballens 1 mit einer dehnbaren und selbstanhaftenden Folie 2 handelt es sich um ein Ausführungsbeispiel mit einem Dreharm 3 und einem feststehenden Wickeltisch 4 zur Aufnahme eines Erntegutballens 1, wie es im wesentlichen in der EP 0 234 763 A1 beschrieben ist. Der Dreharm 3 trägt an seinem äußeren, unteren Ende eine Folienvorratsrolle 5, die während des Umhüllvorganges in einer Drehbewegung mit einer Drehrichtung 6 um eine vertikale Achse 7 um den Erntegutballen 1 herum geführt wird, wobei ein Folienstreifen 8 von der Folienvorratsrolle 5 abgezogen und um den sich um eine horizontale Rotationsachse 9 mit einer Drehrichtung 10 drehenden Erntegutballen 1 gewickelt wird. Anstelle Folie kann auch ein anderes Umhüllmaterial, wie beispielsweise Netz verwendet werden.Wie aus Figur 1 hervorgeht, ist der gesamte äußere Ballenumfang mit sich überlappenden Folienstreifen, beispielsweise zweifach umwickelt, so daß der Umhüllvorgang unmittelbar vor der Beendigung ist, die dadurch erfolgt, daß eine nicht dargestellte Schneid-Klemmeinrichtung den Folienabschnitt 8 im freien Bereich zwischen Ballen 1 und Dreharm 3 abgetrennt und durch Klemmung für den Umhüllvorgang eines weiteren Ballens 1 bereithält.

Wie aus Figur 1 weiterhin hervorgeht, ist in der Bewegungsbahn des Folienstreifens 8 zwischen der Folienvorratsrolle 5 und dem Erntegutballen 1 eine Folienstreckvorrichtung 11 angebracht, welche zumindest zwei vertikal angeordnete Streckwalzen 12 umfaßt. Die Folienstreckvorrichtung 11 ist dabei mit der Vorratsrolle 5 zu einer Baueinheit zusammengefaßt am Dreharm 1 angebracht.

Für den Rundballen ist ein Drehantrieb vorgesehen. Dieser besteht aus einem nur schematisch angedeutetem Hydromotor 13, der eine oder beide Walzen 14 antreibt. Ein weiterer Drehantrieb, der ebenfalls aus einem Hydromotor 15 besteht, ist für den Dreharm 3 vorgesehen. Beide Hydromotoren 13, 15 stehen über Fluidleitungen mit Hydroventilen 16, 17 in Verbindung und unterliegen einer Steuerung oder Regelung, die die Umdrehungszahl des Ballens 1 gegenüber der Umdrehungszahl des Dreharmes 3 steuert oder regelt zur Erzeugung eines gleichförmigen, vorgebbaren Bewicklungsmusters des Ballens 1. Diese Steuerung oder Regelung erfolgt so, daß durch Wahl des Drehzahlverhältnisses von Ballen 1 zu Dreharm 3 ein Überlappungsabstand 18 zwischen zwei Folienbahnen 19,20 vorgegeben wird, der während des gesamten Umhüllungsprozesses konstant bleiben soll.

Die in der Zeichnung dargestellte Steuerung oder Regelung ist eine beispielsweise Ausführungsform der Erfindung. Diese besteht im wesentlichen aus einem in einer Schlepperkabine angeordneten Bediengerät 21, das in Wirkverbindung steht mit einer Steuer- oder Regeleinheit 22. Mit der Steuer- oder Regeleinheit 22 sind neben den Hydromotoren 13, 15 als Aktoren mehrere Sensoreneinrichtungen verschaltet:

Eine erste Sensoreinrichtung 23 erfaßt die IstDrehzahl des Dreharmes 3. Eine zweite Sensoreinrichtung 24 ist am Dreharm 3 angeordnet und mißt während des Umhüllvorganges den Überlappungsabstand 18 zwischen der von der Folienstreckvorrichtung 11 kommenden Folienbahn 20 und der vorhergehenden auf dem Ballen 1 befindlichen Folienbahn 19 oder prüft die Einhaltung eines vorgegebenen Überlappungsabstandes. Die Sensoreinrichtung 24 ist zwischen Folienbahn 20 und Folienvorratsrolle 5 in einer Höhe innerhalb der Folienbreite angeordnet, die dem vorgegebenen Überlappungsabstand entspricht und ist in der in Fig. 1 dargestellten Anfangs- und Endposition 25 des Dreharmes 3 so ausgerichtet, daß der in Drehrichtung 10 des Ballens 1 untere Bereich 26 der vorhergehenden Folienbahn 19 im Ansprechbereich der Sensoreinrichtung 24 liegt, d.h. bei ordnungsgemäßer Ballenumwicklung sieht die Sensoreinrichtung 24 ständig Folie, erkennt aber sofort einen nichtbewickelten Bereich 27 , wenn der Überlappungsabstand 18 überschritten wird. Dieses Signal wird dem Bediener und/oder der Steuer-/Regeleinheit 21, 22 übermittelt, die die Sollüberlappung schnellstmöglichst einsteuert oder -regelt.

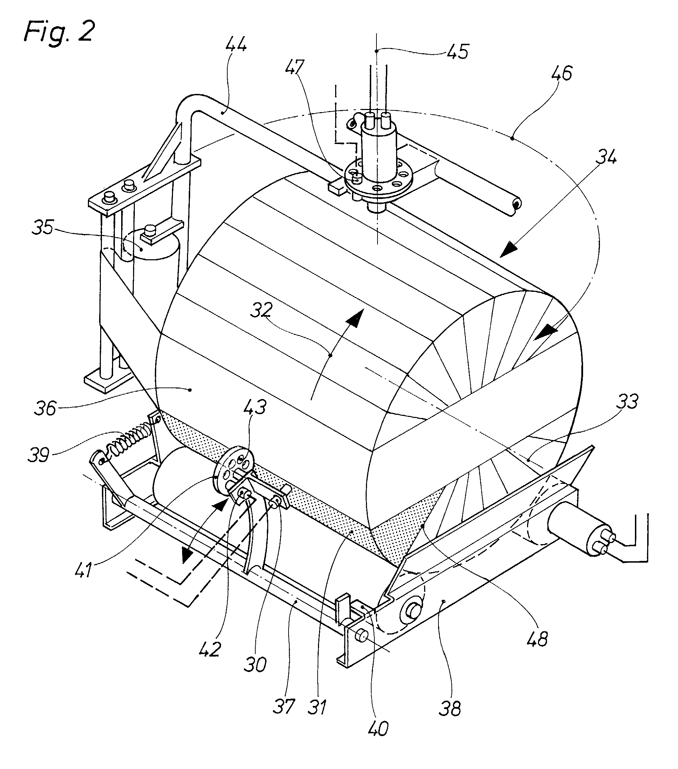

Durch Anordnung mehrerer Sensoren 24 im Abstand übereinander könnte auch das Abweichungsmaß der Ist-Überlappung von der Soll-Überlappung gemessen und signalisiert werden. Da beispielsweise 750mm breite Folien mit einem anderen Überlappungsgrad (70%) verarbeitet werden, ist die Sensoreinrichtung 24 in dem entsprechenden Bereich höheneinstellbar. Eine unerwünschte 100%ige Folienüberlappung läßt sich beispielsweise mit einem in Fig.2 gezeigten und erläuterten Ballenstillstandssensor 42 vermeiden, der den Wickelvorgang selbsttätig bei Ballenstillstand unterbricht, korrigiert oder den Ballenstillstand dem Bediener signalisiert. Die Grundeinstellung des Drehzahlverhältnisses Ballen 1 zu Dreharm 3, das den Überlappungsgrad bestimmt, wird in bekannter Weise durch elektronische oder manuelle Ansteuerung des Hydroventils 17 der in Reihe geschalteten Hydromotoren 13, 15 bewerkstelligt. Erfindungsgemäß erfolgt die Steuerung des Hydroventils 17 durch die Sensoreinrichtung 24 mit der Folienüberlappung als Regelgröße. Grundsätzlich ist es aber auch möglich, die Folienüberlappung als Regelgröße einem Antriebssystem zu überlagern, bei dem der Vorschub des Ballens 1 in Umfangs-/ Drehrichtung 10 pro Zeiteinheit gemessen wird und die Steuerung des Drehantriebes 15 des Dreharmes 3 mit dieser Regelgröße beaufschlagt wird.

Eine dritte Sensoreinrichtung 28 ist vorgesehen, um festzustellen, wieviel Dreharmumdrehungen erforderlich sind bis zur erstmaligen vollständigen Umwicklung des gesamten Ballens 1. Die Sensoreinrichtung 28 ist dem unbewickelten als Punktraster dargestellten Ballenbereich 27 zugeordnet, der zuletzt mit einer Folienbahn überwickelt wird. Das erfolgt dadurch, daß die Sensoreinrichtung 28 auf der unbewickelten Ballenstirnseite 29 in kleinem Abstand entgegen der Drehrichtung 10 des Ballens 1 umfangsversetzt zum auf den Ballen 1 aufgebrachten, von der Folienvorratsrolle 5 abgezogenen Folienabschnitt 20 angeordnet ist. Da der Ballen 1 auf seinem Umfang angetrieben wird, ist der Vorschubweg eines Ballens 1 bei kleinem und großem Durchmesser gleich. Der größere Ballendurchmesser benötigt nur eine größere Anzahl von Umwicklungen. Diese Sensoreinrichtung 28 ermöglicht die Feststellung der jeweils richtigen Anzahl von Dreharmumdrehungen nicht nur bei unterschiedlichen Ballendurchmessern, sondern auch bei Vorrichtungen mit zwei oder mehreren Folienbahnen 8 pro Umdrehung des Dreharmes 3 oder unterschiedlichen Folienbreiten als Voraussetzung für einen automatischen Ablauf des Wickelprozesses bei sich ändernden Parametern. Zur Anpassung an unterschiedliche Ballenabmessungen ist die Sensoreinrichtung 28 verstellbar ausgebildet.

Die Arbeitsweise der erfindungsgemäßen Vorrichtung ist wie folgt:

Am Bediengerät 21 sind beispielsweise folgende Vorgaben eingegeben:
Folienüberlappung: 60%
Anzahl der Wickellagen: 4
Sicherheitsumwicklung (zusätzliche Dreharmumdrehung): 1

Der Ballen 1 dreht sich während des Umhüllbetriebes in Richtung des Pfeils 10. Gleichzeitig umkreist der Dreharm 3 mit der Folienvorratsrolle 5 den Ballen 1 in Richtung des Pfeils 6, wobei sine Folienbahn 20 von der Vorratsrolle 5 abgezogen und teilüberlappend auf die vorhergehende Folienbahn 19 und auf die unbewickelte Ballenoberfläche gelegt wird. Die in Fig.1 dargestellte Dreharmstellung 25 entspricht einer Anfangs- bzw. Endpositon nach einer vollen Umdrehung des Dreharmes 3. Die am Dreharm 3 befestigte Sensoreinrichtung 24 ist in dieser Dreharmposition 25 auf den unteren Folienbereich der vorhergehenden Folienbahn 19 gerichtet, deren Unterkante 26 in Strichpunktlinie gezeichnet ist. Sobald während einer Dreharmdrehung die Überlappung beider Folienbahnen 19, 20 kleiner als vorgegeben wird, erhält die Steuer-/ Regeleinheit 22 ein Signal, worauf das Drehzahlverhältnis Ballen 1 zu Dreharm 3 durch Ansteuerung des elektronisch ansteuerbaren Stromregelventils 17 so verändert wird, daß der Sensor 24 wieder im Folienbereich 26 liegt. Der in Fig.1 dargestellte Ballen 1 ist bereits bis auf den Punktrasterbereich 27 mit Folie umwickelt. Die erste Sensoreinrichtung 23 hat die Dreharmumdrehungen bis zur gezeigten Umhüllung gemessen und in der Speichereinheit abgespeichert. Bei der nächsten Umdrehung des Dreharmes 3 wird der Punktrasterbereich 27 mit Folie überdeckt. Dieses erkennt und signalisiert die Sensoreinrichtung 28 an die Steuer-/ Regeleinheit 22. Es liegen jetzt überall zwei Lagen/Folienschichten auf dem Ballen 1, der Ballen 1 hat sich eine halbe Umdrehung um die eigene Achse 9 gedreht. Der Rechner addiert zu der gemessenen Zahl der Dreharmumdrehungen nun die Anzahl der vorgegebenen Sicherheitsumwicklungen hinzu und multipliziert diese Zahl mit dem Faktor zwei und läßt den Dreharm 3 automatisch bis zum Erreichen der gesamten, ermittelten Anzahl von Dreharmumdrehungen weiter laufen. Bei Beendigung des Umhüllprozesses weist der Ballen 4 Folienlagen bzw. -schichten auf. Ändert sich nun der Ballendurchmesser oder wird eine 750 mm breite Folie statt einer 500 mm Folie breiten eingesetzt, errechnet sich die Steuer-/ Regeleinheit 22 anhand der von der Sensoreinrichtung 23 in Abhängigkeit der Sensoreinrichtung 28 gemessenen Anzahl von Dreharmumdrehungen jeweils automatisch die richtige Anzahl von Dreharmumdrehungen, um 4 Lagen Folie auf den Ballen 1 aufzubringen. Irgendwelche Manipulationen entfallen für den Bediener. Bereits bei der ersten vollen Dreharmumdrehung und bei weiteren Umdrehungen überwacht die zweite Sensoreinrichtung 24 die vorgegebene Überlappung 18 der Folienbahnen 19, 20 und signalisiert Abweichungen, die sofort selbsttätig durch die Steuer-/ Regeleinheit 22 ausgeregelt werden. Somit ist ohne visuelle Überwachung des Bedieners eine ordnungsgemäße Steuerung / Regelung und Überwachung des Umhüllprozesses gewährleistet. Ein Ballenstillstand oder ein Vorschubweg des Ballens 1 in Umfangs-Drehrichtung 10 des Ballens 1, der wesentlich von dem vorgegebenen Folienüberlappungsgrad abweicht, kann durch die in Fig.2 dargestellte Sensoreinrichtung 42 signalisiert und bei der Steuerung / Regelung berücksichtigt werden. Folienrisse bzw. ein Ende der Folienvorratsrolle wird durch bekannte Einrichtungen signalisiert, die die Steuerung entsprechend beeinflussen. Im Rahmen der Qualitätskontrolle ist es auch möglich, die fertige Ballenumhüllung während einer Ballenumdrehung zu kontrollieren oder nachzukontrollieren.

Das Ausführungsbeispiel gemäß Figur 2 zeigt eine Sensoreinrichtung 30 zum Erkennen des zuletzt umwickelten Ballenbereiches 31, der als Punktrasterbereich gezeichnet ist. Die Sensoreinrichtung 30 ist in diesem Beispiel der unbewickelten Ballenumfangsseite zugeordnet und entgegen der Drehrichtung 32 des während des Umhüllvorganges um seine Zylinderachse 33 rotierenden Erntegutballens 34 in kleinem Abstand versetzt zu der von der Folienvorratsrolle 35 abgezogenen Folienbahn 36 angeordnet. Die Sensoreinrichtung 34 ist an einem Schwenkhebel 37 angeordnet, der am Gestell 38 ortsfest aber drehbar gelagert ist und von einer Feder 39 gegen einen Anschlag 40 gezogen wird. Der Schwenkhebel 37 weist eine Tastrolle 41 auf, die auf der Ballenoberfläche läuft, so daß die Sensoreinrichtung 30 während der Ballendrehung um seine Achse 33 auf konstantem Abstand zur Ballenoberfläche gehalten wird. Die Tastrolle 41 ist gleichzeitig als Sensoreinrichtung 42 für den Ballenstillstand und als Vorschubmeßgerät des Ballens 34 ausgebildet. Dazu ist die Tastrolle 41 mit mehreren auf dem Umfang verteilten Impulsgebern 43 versehen. Bleiben die Impulse während der Drehung des Dreharmes 44 um die Achse 45 in Richtung des Pfeiles 46 aus, so signalisiert dieses die Sensoreinrichtung 42 einer nicht dargestellten Steuer/Regeleinheit, die die Steuerung entsprechend beeinflußt. Darüber hinaus zählt die Steuereinheit die Impulse des Tastrades 41 jeweils während einer Umdrehung des Dreharmes 44 um die vertikale Achse 45. Die Umdrehungen des Dreharmes 44 werden durch eine dritte Sensoreinrichtung 47 festgestellt. Auf diese Art und Weise kann über die Vorschubmessung die Ist-Folienüberlappung geprüft werden; diese darf während einer Dreharmumdrehung nicht größer sein als der Überlappungsabstand 18 zweier überdeckender Folienbahnen 19, 20, siehe Fig.1. Darüber hinaus erkennt die Sensoreinrichtung 30, wenn der zuerst auf den Ballen 34 gelegte Folienstreifen 48 vor seinen Arbeitsbereich kommt. Mittels der Sensoreinrichtung 47 können die Dreharmumdrehungen gezählt werden, bis die Sensoreinrichtung 48 schaltet, d. h. der Ballen 34 erstmalig voll mit Folie umhüllt ist. Die Auswertung der Signalwerte erfolgt entsprechend der in Figur 1 beschriebenen Vorgehensweise.

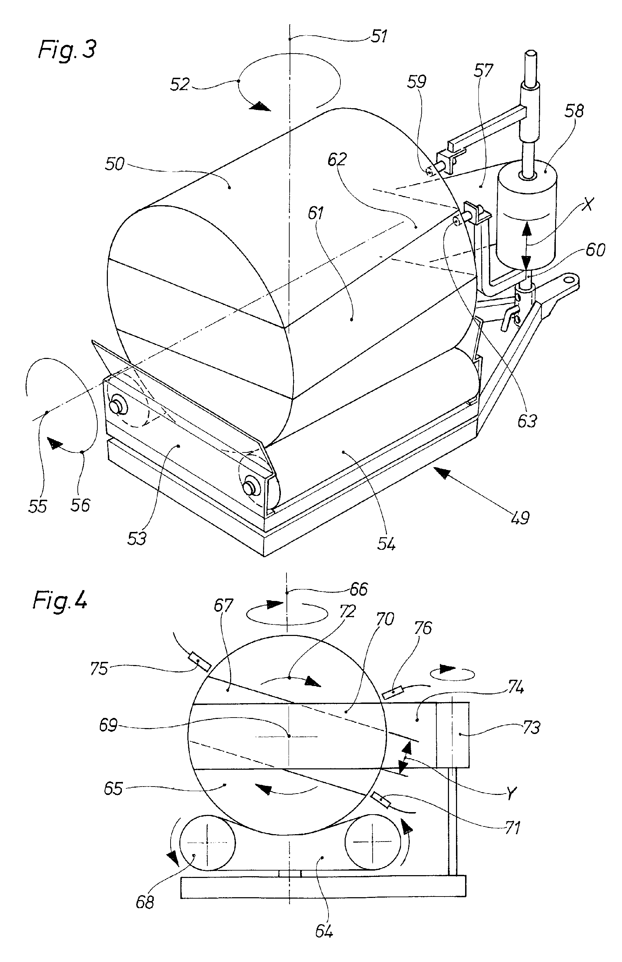

Bei der Ausführungsform gemäß Figur 3 ist eine Drehtisch-Vorrichtung 49 zum Umhüllen eines Erntegutballens 50 gezeigt. Diese besteht im wesentlichen aus einem um eine vertikale Achse 51 in Drehrichtung 52 antreibbaren Wickeltisch 53 mit antreibbaren, im Abstand voneinander angeordneten Walzen 54, die den darauf ruhenden Erntegutballen 50 gleichzeitig um seine Zylinderachse 55 in Drehrichtung 56 drehen, wobei der Ballen 50 eine Folienbahn 57 von einer Folienvorratsrolle 58 über eine nicht dargestellte Streckvorrichtung abzieht und um sich herumwickelt. Hinsichtlich Aufbau und Wirkungsweise einer derartigen Drehtisch-Vorrichtung kann auf die EP 0367529 B1 verwiesen werden. Wie aus Fig.3 erkennbar, ist eine erste Sensoreinrichtung 59 ortsfest aber höheneinstellbar an dem Träger 60 der Folienvorratsrolle 58 befestigt. Zur Anpassung an unterschiedliche Ballenabmessungen kann die Sensoreinrichtung 59 auch abstandsverstellbar zum Ballen 50 angeordnet sein. Bei einer Überlappungsvorgabe von 60% ist die Sensoreinrichtung 59 in einer solchen Höhe bezogen auf die abgezogene Folienbahn 57 angeordnet, daß die Sensoreinrichtung 59 bei dem vorgegebenen Überlappungsabstand X gerade noch den oberen Bereich des auf dem Ballen 50 liegenden Folienabschnittes 61 überdeckt. Sobald die vorgegebene Überlappung X unterschritten wird, z.B. durch eine zu schnelle Drehung des Ballens 50 in Drehrichtung 56 relativ zur Drehung des Ballens 50 um die vertikale Achse 51, kommt der unbewickelte Bereich 62 vor die Sensoreinrichtung 59, die ein entsprechendes Signal an den Bediener oder die Maschinensteuerung sendet, um die Sollüberlappung wieder herzustellen. Auf diese Art und Weise ist eine ständige Überwachung der Sollfolienüberlappung sichergestellt.

Ein nicht dargestellter Ballenstillstandssensor signalisiert, daß sich der Ballen 50 bei Drehung um die vertikale Achse 51 nicht gleichzeitig auch um die Zylinderachse 55 dreht. Dadurch lassen sich Überwicklungen des Ballens mit 100%iger Folienüberlappung vermeiden.

Wesentlich ist, daß der vorgegebene Mindestüberlappungsabstand eingehalten und daher auch überwacht wird. Das Überschreiten eines maximalen Überlappungsabstandes läßt sich durch richtige Vorgabe des Drehzahlverhältnisses der Ballendrehung um die beiden Achsen 55, 51 vermeiden, wobei eine Vorschubmessung des Ballens 50 auf seinem Umfang in Drehrichtung 56 um seine Achse 55 pro Drehung des Ballens 50 um die vertikale Achse 51 auch hier zur Überwachung dienen könnte. Der gemessene Vorschubweg pro Ballendrehung darf nicht kleiner sein als ein Mindestmaß, das sich aus der Folienbreite und dem vorgegebenen Überlappungsgrad ergibt. Somit läßt sich die Folienüberlappung innerhalb exakt einer Bandbreite (Mindest- /Maximalüberlappung) überwachen und steuern bzw. regeln.

Die zweite Sensoreinrichtung 63 ist während nahezu einer halben Ballendrehung um die Achse 55 dem unbewickelten Ballenbereich 62 zugeordnet und ist dicht oberhalb der von der Folienvorratsrolle 58 abgezogenen Folienbahn 57 ebenfalls verstellbar an dem Träger 60 für die Folienvorratsrolle 58 angeordnet. Mittels dieser Sensoreinrichtung 63 und einer weiteren Sensoreinrichtung für die Umdrehungszahl des Ballens 50 um die Achse 51 wird die Anzahl der Ballenumdrehungen um die Achse 51 gemessen, bis die gesamte Ballenoberfläche erstmals mit Folie umwickelt ist. Die Umsetzung dieses Meßwertes zur Steuerung der Ballendrehung um die eigene Achse 55 erfolgt analog zu dem Ausführungsbeispiel gemäß Figur 1. Die Sensoreinrichtungen 59, 63 sind außerhalb der Umlaufbahn des Ballens 50 um die Achse 51 angeordnet. Eine der Sensoreinrichtungen kann auch als Umdrehungszähler ausgebildet sein.

Fig.4 zeigt in schematischer Seitenansicht eine Drehtisch-Anordnung zu Beginn eines Umhüllvorganges.Der Drehtisch 64 hat sich mit dem Ballen 65 um eine vertikale Achse 66 gedreht und eine erste Folienbahn 67 nach einer kompletten Umdrehung um den Ballen 65 gewickelt. Die Walzen 68 drehen dann den Ballen 65 um seine eigene Achse 69. Der Ballendrehweg am Umfang gemessen beträgt pro Ballenumdrehung um die vertikale Achse 65 der Folienbreite abzüglich des Überlappungsabstandes zweier Folienbahnen. Während der zweiten Drehung des Ballens 65 um die vertikale Achse 66 wurde eine zweite Folienbahn 70 um den Ballen 65 gewickelt, die die erste Folienbahn 69 mit dem Abstand Y überlappt. Eine erste Sensoreinrichtung 71 ist in Drchrichtung 72 des Ballens 65 in einem etwas kleineren Abstand zur von der Folienvorratsrolle 73 ankommenden Folienbahn 74 angeordnet, als dem Soll-Vorschubweg des Ballens 65 während einer Ballendrehung um die Achse 66 entsprechend, d.h. der Folienbreite abzüglich des Überlappungsabstandes. Bei ordnungsgemäßer Überlappung sieht die Sensoreinrichtung 71 auf Folie. Wird der Ballen 65 um einen zu kleinen Abstand gedreht, überlappen sich die Folienbahnen 67, 70 zu viel. Der Sensor 71 erkennt nach der betreffenden Ballendrehung um die Achse 66 keine Folie und signalisiert dieses der Steuer/Regeleinheit, die das Drehzahlverhältnis in Richtung vorgegebener Überlappung korrigiert.

Der Sensor 71 kann vorzugsweise so ausgebildet sein, daß er eine oder mehrere Folienschicht/en erkennt. So wäre mit dieser Sensoreinrichtung auch eine ständige Überwachung des Umhüllprozesses mit mehr als zwei Folienschichten möglich. Ab der dritten Ballendrehung müßte der Sensor dann zwei Folienschichten erkennen. Auf der diametral entgegengesetzten Ballenseite könnte eine Sensoreinrichtung 75 gerade außerhalb der zweiten Folienbahn 70 angeordnet sein, die erkennt, ob der Ballen nicht mit zu großem Vorschubweg in Drehrichtung 72 bewegt wurde, was eine zu geringe Folienüberlappung zur Folge hätte. Somit läßt sich prüfen, ob die Ist-Überlappung innerhalb eines Toleranzbandes liegt. Es ist möglich , einen oder mehrere Sensoren 71, 75 erst nach einer Vierteldrehung des Ballens 65 anzuordnen oder auch zusätzlich zu den erstgenannten. Schließlich ist eine weitere Sensoreinrichtung 76 dicht oberhalb der abgezogenen Folienbahn 74 vorgesehen, die feststellt, wann der letzte Ballenbereich überwickelt wird. Diese ist oberhalb der von der Folienvorratsrolle 73 kommenden Folienbahn 74 angeordnet und auf den unbewickelten Stirnseitenbereich gerichtet, der während der Drehung des Ballens 65 um die Achse 69 zuletzt mit Folie überwickelt wird. Die Auswertung dieses Sensorsignals erfolgt entsprechend dem in Figur 1 beschriebenen Beispiel.

## Patentansprüche

1. Vorrichtung zum Umhüllen von Körpern, insbesondere von Erntegutballen (1, 34, 50, 65) aus Heu, Stroh oder angewelktem Grüngut, welche mit wenigstens einer Umhüllmaterialbahn (8, 36, 57, 74) umwickelt werden, **gekennzeichnet durch** eine oder mehrere Sensoreinrichtung/en (23, 24, 28, 30, 42, 43, 47, 59, 63, 71, 75, 76) zur Überwachung und/oder Steuerung des Umhüllprozesses und/oder zur Kontrolle der fertigen Ballenumhüllung.

2. Vorrichtung nach Anspruch 1, **gekennzeichnet durch** eine oder mehrere Sensoreinrichtung/en (24, 42, 43, 63, 71, 75) zur Überwachung und/oder Steuerung der korrekten Überlappung zweier Umhüllmateriallagen (19, 20, 57, 61, 77, 74).

3. Vorrichtung nach Anspruch 1 oder 2, **dadurch gekennzeichnet, daß** wenigstens eine Sensoreinrichtung (24, 63, 71, 75) zwischen der von einer Umhüllmaterialvorratsrolle (5, 58, 73) kommenden Umhüllmaterialbahn (20, 57, 74) und/oder der vorhergehenden, auf dem Ballen (1, 50, 65) befindlichen Umhüllmaterialbahn (19, 61, 67) angeordnet ist.

4. Vorrichtung nach einem der Ansprüche 1 bis 3, **gekennzeichnet durch** eine oder mehrere Sensoreinrichtung/en (23, 28, 30, 42, 43, 47, 59, 76) zur Überwachung und/oder Steuerung der vollständigen, vorgebbaren Umhüllung des Erntegutballens (1, 34, 50, 65).

5. Vorrichtung nach Anspruch 1 oder 4, **dadurch gekennzeichnet, daß** wenigstens eine Sensoreinrichtung (28, 30, 59, 76) der unbewickelten Ballenseite (27, 31, 62) in kleinem Abstand entgegen der Drehrichtung (10, 32, 56, 72) des Ballens (1, 34, 50, 65) umfangsversetzt zur von einer Umhüllmaterialvorratsrolle (5, 35, 58, 73) kommenden Umhüllmaterialbahn ( 20, 36, 57, 74) zugeordnet ist, welche eine Belegung des Ballens (1, 34, 50, 65) mit Umhüllmaterial erkennt.

6. Vorrichtung nach einem der Ansprüche 1 bis 5, **dadurch gekennzeichnet, daß** eine oder mehrere Sensoreinrichtungen (59, 63, 71, 75, 76) an einem Wickeltisch (49, 64) angeordnet ist/sind, der den Ballen (50, 65) während des Umhüllbetriebes sowohl um eine horizontale (33, 55) als auch eine vertikale Achse (51, 66) dreht.

7. Vorrichtung nach Anspruch 1 bis 6, **dadurch gekennzeichnet, daß** wenigstens eine Sensoreinrichtung (24) an einem oder mehreren den Ballen (1) während des Umhüllbetriebes umkreisenden Dreharm (3)/en angeordnet ist.

8. Vorrichtung nach einem oder mehreren der vorhergehenden Ansprüche, **gekennzeichnet durch** eine elektronische Steuer- /Regeleinheit (22), welche zumindest eine Sensoreinrichtung (23, 47) zur Erfassung und/oder Anzeige der Anzahl der Umhüllmaterialumwicklungen auf dem Ballen (1, 34) aufweist.

9. Vorrichtung nach Anspruch 8, **dadurch gekennzeichnet, daß** die Anzahl der Umhüllmaterialumwicklungen bis zur erstmaligen vollständigen Umhüllung der ganzen Ballenoberfläche in Abhängigkeit von der Sensoreinrichtung (28, 30, 59, 76) erfaßbar ist.

10. Vorrichtung nach Anspruch 9, **dadurch gekennzeichnet, daß** die Anzahl der Umhüllmaterialumwicklungen bis zur erstmaligen vollständigen Umhüllung eines Ballens (1, 34, 50, 65) in einer Speichereinheit der elektronischen Steuer-/Regeleinheit (22) abgespeichert ist.

11. Vorrichtung nach einem der vorhergehenden Ansprüche 8 bis 10, **dadurch gekennzeichnet, daß** die elektronische Steuer/Regeleinheit (22) eine Eingabeeinheit (21) aufweist, in die die gewünschte Anzahl von Umhüllmateriallagen gleich (schichten) eingebbar ist.

12. Vorrichtung nach einem oder mehreren der vorhergehenden Ansprüche, **dadurch gekennzeichnet, daß** die elektronische Steuer- /Regeleinheit (22) einen Rechner aufweist, der in Abhängigkeit von den erfaßten und/oder vorgegebenen Werten die Anzahl der Umhüllmaterialumwicklungen, d.h. die Anzahl der Ballenumdrehungen um die Achse (51, 66) oder die Anzahl der Dreharmumdrehungen (3, 44) bis zum Erreichen der vorgegebenen Anzahl von Umhüllmateriallagen selbst ermittelt.

13. Vorrichtung nach Anspruch 12, **dadurch gekennzeichnet, daß** die Anzahl der Umhüllmaterialumwicklungen unter Berücksichtigung eines in einer Eingabeeinheit (21) vorgebbaren Sicherheitsfaktors ermittelt wird.

14. Vorrichtung nach einem oder mehreren der vorhergehenden Ansprüche 8 bis 11, **dadurch gekennzeichnet, daß** die elektronische Steuer-/Regeleinheit (22) eine Eingabeeinheit (21) aufweist, in die der Überlappungsgrad (18, X, Y) von zwei aufeinanderfolgenden Umhüllmaterialumwicklungen (19, 20, 57, 61, 67, 70) direkt oder indirekt eingebbar ist.

15. Vorrichtung nach einem oder mehreren der vorhergehenden Ansprüche, **dadurch gekennzeichnet, daß** der Ist-Überlappungsgrad bei Abweichungen vom Soll-Überlappungsgrad in Abhängigkeit von der Sensoreinrichtung (24, 42, 43, 63, 71, 75) direkt oder indirekt beeinflußbar ist.

16. Vorrichtung nach Anspruch 15, **dadurch gekennzeichnet, daß** die Sensoreinrichtung (24, 42, 43, 63, 71, 75) zumindest Abweichungen vom Soll-Überlappungsgrad dem Bediener signalisiert.

17. Vorrichtung nach einem oder mehreren der vorhergehenden Ansprüche, **dadurch gekennzeichnet, daß** ein Glanzsensor vorgesehen ist, welcher die unbewickelte Ballenoberfläche als matt und die bewickelte als glänzend erkennt.

18. Vorrichtung nach einem oder mehreren der vorhergehenden Ansprüche 1 bis 16, **dadurch gekennzeichnet, daß** ein Leitfähigkeitssensor vorgesehen ist, der auf die unterschiedliche Leitfähigkeit eines Ballens (1) mit und ohne Umwicklung mit Umhüllmaterial (2)anspricht.

19. Vorrichtung nach einem oder mehreren der vorhergehenden Ansprüche 1 bis 16, **dadurch gekennzeichnet, daß** die Vorrichtung einen Drucksensor aufweist, welcher die unterschiedlichen Anströmdruckmeßwerte einer Ballenoberfläche mit und ohne Umhüllmaterial erkennt.

20. Vorrichtung nach einem oder mehreren der vorhergehenden Ansprüche, **dadurch gekennzeichnet, daß** eine Sensoreinrichtung (24, 42, 63) auf unterschiedliche Umhüllmaterialdicken durch sich überlappende Umhüllmaterialbahnen anspricht.

21. Vorrichtung nach einem oder mehreren der vorhergehenden Ansprüche, **dadurch gekennzeichnet, daß** eine Sensoreinrichtung (24, 42, 63, 71) unterschiedliche Umhüllmaterialfarben oder Farbmarkierungen erkennt.

22. Vorrichtung nach einem oder mehreren der vorhergehenden Ansprüche, **dadurch gekennzeichnet, daß** eine Sensoreinrichtung (24, 29, 42, 59, 63, 71, 76) auf unterschiedliche Licht- oder Schallreflexionen der bewickelten und der unbewickelten Ballenoberfläche anspricht.

23. Vorrichtung nach einem oder mehreren der vorhergehenden Ansprüche, **dadurch gekennzeichnet, daß** eine oder mehrere Sensoreinrichtung/en an unterschiedliche Ballenabmessungen und/oder Umhüllmaterialbreiten angepaßbar ist/sind.

24. Vorrichtung nach einem oder mehreren der vorhergehenden Ansprüche, **dadurch gekennzeichnet, daß** die Sensoreinrichtung (24, 63, 71, 75) auf vorgegebene Überlappungen (18,X, Y) zweier Umhüllmaterialbahnen (19, 20, 57, 61, 67, 70) einstellbar ist.

25. Vorrichtung nach einem oder mehreren der vorhergehenden Ansprüche, **dadurch gekennzeichnet, daß** eine Sensoreinrichtung (24, 29, 42, 59, 63, 71, 75, 76) im Abstand zur Ballenoberfläche angeordnet ist.

26. Vorrichtung nach einem oder mehreren der vorhergehenden Ansprüche, **dadurch gekennzeichnet, daß** die Sensoreinrichtung (30, 42, 43) durch ein der Ballenkontur folgendes Führungselement (41) getragen wird.

27. Vorrichtung nach einem oder mehreren der vorhergehenden Ansprüche, **dadurch gekennzeichnet, daß** eine Sensoreinrichtung (41, 42, 43) den Vorschubweg des Ballens (34) in Umfangs-Drehrichtung (32) des Ballens (34) direkt oder indirekt mißt und/oder signalisiert.

28. Vorrichtung nach einem oder mehreren der vorhergehenden Ansprüche, **dadurch gekennzeichnet, daß** ein Sensor (42, 43) vorgesehen ist zur Feststellung, ob sich der Ballen (34) während des Umhüllbetriebes dreht.

29. Vorrichtung nach Anspruch 28, **dadurch gekennzeichnet, daß** der Sensor (42, 43) mit wenigstens einer weiteren Sensoreinrichtung (47) und der Steuer- und/oder Regeleinheit (22) direkt oder indirekt in Wirkverbindung steht.

30. Vorrichtung nach einem oder mehreren der vorhergehenden Ansprüche, **gekennzeichnet durch** eine Folienrißanzeigeeinrichtung und/oder eine Einrichtung zum Signalisieren des Endes der Umhüllmaterialvorratsrolle.

31. Vorrichtung nach einem oder mehreren der Ansprüche 28 bis 30, **dadurch gekennzeichnet, daß** der Sensor (42, 43) mit der elektronischen Steuer- /Regeleinheit (22) gekoppelt ist und daß der Wickelprozeß direkt oder indirekt durch den Sensor (42, 43) beeinflußbar ist.

32. Vorrichtung nach einem oder mehreren der vorhergehenden Ansprüche, **dadurch gekennzeichnet, daß** einer Umhüllmaterialbahn, einer Umhüllmaterialbahnvorratsrolle oder wenigstens einer Umlenk- oder Abzugsrolle eine Längenmeßeinrichtung für die auf einen Ballen aufgebrachte, d.h. von der Umhüllmaterialvorratsrolle abgezogene Umhüllmateriallänge zugeordnet ist, welche den Meßwert signalisiert und/oder anzeigt.

33. Vorrichtung nach einem oder mehreren der vorhergehenden Ansprüche, **dadurch gekennzeichnet, daß** eine oder mehrere Sensoreinrichtungen signalisieren, wenn innerhalb einer vorgebbaren Zeit, einer vorgebbaren Ballendrehung oder einer vorbestimmbaren Abzugslänge des Umhüllmaterials keine Belegung des Arbeitsbereiches wenigstens einer Sensoreinrichtung erfolgt.

34. Verfahren zum Umhüllen von Körpern in einer Vorrichtung nach einem oder mehreren der vorhergehenden Ansprüche, **dadurch gekennzeichnet, daß** die Anzahl der Umhüllmaterialumwicklungen bis zur erstmaligen vollständigen Umhüllung des Ballens (1, 34, 50, 65) durch Sensoreinrichtungen (28, 23, 30, 47, 59, 76) gemessen und an eine Steuer- /Regeleinheit (22) und/oder dem Bediener signalisiert wird.

35. Verfahren zum Umhüllen von Körpern nach Anspruch 34, **dadurch gekennzeichnet, daß** die gemessene Anzahl von Umhüllmaterialumwicklungen als ein Parameter für die auf den Ballen aufzubringenden Umhüllmateriallagen bzw. -schichten dient.

36. Verfahren nach Anspruch 35, **dadurch gekennzeichnet, daß** die Steuer- /Regeleinheit (22) einen Rechner aufweist, der die gesamte Anzahl der Umhüllmaterialumwicklungen aus der gemessenen Anzahl der Umhüllmaterialumwicklungen und der vorgegebenen Anzahl von Umhüllmateriallagen /-schichten errechnet.

37. Verfahren nach Anspruch 35 oder 36, **dadurch gekennzeichnet, daß** in die Steuer- /Regeleinheit (22) direkt oder indirekt ein Sicherheitsparameter eingebbar ist, der auf die gemessene Anzahl der Umhüllmaterialumwicklungen eine oder mehrere Umhüllmaterialumwicklungen addiert.

38. Verfahren zum Umhüllen von Körpern nach einem der Ansprüche 34 bis 37 oder in einer Vorrichtung nach einem der vorhergehenden Ansprüche, **dadurch gekennzeichnet, daß** der Soll-Überdeckungsgrad (18, X, Y) zweier aufeinanderfolgender Umhüllmaterialbahnen (19, 20, 57, 61, 67, 74) bzw. das Drehzahlverhältnis direkt oder indirekt in eine elektronische Steuer- /Regeleinheit (22) eingebbar ist.

39. Verfahren nach Anspruch 38, **dadurch gekennzeichnet, daß** Abweichungen des Ist-Überdeckungsgrades zweier aufeinanderfolgender Umhüllmaterialbahnen (19, 20, 57, 61, 67, 74) auf dem Ballen (1, 34, 50, 65) vom vorgegebenen Soll-Überdeckungsgrad (18, X, Y) durch eine oder mehrere Sensoreinrichtungen (23, 24, 42, 43, 63, 71, 75) feststellbar sind und an die Steuer- /Regeleinheit (22) und/oder den Bediener signalisiert werden.

40. Verfahren nach Anspruch 39, **dadurch gekennzeichnet, daß** der Ist-Überdeckungsgrad in Abhängigkeit von der Sensoreinrichtung (24, 42, 43, 63, 71, 75) beeinflußbar ist, insbesondere bei Abweichungen des Ist-Überdeckungsgrades vom Soll-Überdeckungsgrad.

41. Verfahren nach Anspruch 38, **dadurch gekennzeichnet, daß** die Umhüllmaterialbahnbreite in eine elektronische Steuer- /Regeleinheit (22) eingebbar ist.

42. Verfahren nach Anspruch 41, **dadurch gekennzeichnet, daß** der Überdeckungsgrad in Abhängigkeit von der Umhüllmaterialbreite beeinflußbar ist.
